(19) Europäisches Patentamt
European Patent Office
Office européen des brevets

(11) **EP 2 931 572 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(21) Anmeldenummer: **13779873.2**

(22) Anmeldetag: **23.10.2013**

(51) Int Cl.:
**B60T 8/26** *(2006.01)*    **B60T 8/48** *(2006.01)*

(86) Internationale Anmeldenummer:
**PCT/EP2013/072119**

(87) Internationale Veröffentlichungsnummer:
**WO 2014/090467 (19.06.2014 Gazette 2014/25)**

(54) **VERFAHREN ZUM BETREIBEN EINES BREMSSYSTEMS EINES FAHRZEUGS UND STEUERVORRICHTUNG FÜR EIN BREMSSYSTEM EINES FAHRZEUGS**

METHOD FOR OPERATING A BRAKING SYSTEM OF A VEHICLE AND CONTROL DEVICE FOR A BRAKING SYSTEM OF A VEHICLE

PROCÉDÉ POUR FAIRE FONCTIONNER UN SYSTÈME DE FREINAGE D'UN VÉHICULE ET DISPOSITIF DE COMMANDE D'UN SYSTÈME DE FREINAGE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2012 DE 102012222974**

(43) Veröffentlichungstag der Anmeldung:
**21.10.2015 Patentblatt 2015/43**

(73) Patentinhaber: **Robert Bosch GmbH**
**70442 Stuttgart (DE)**

(72) Erfinder:
• STRENGERT, Stefan
70469 Stuttgart (DE)
• KUNZ, Michael
71711 Steinheim An Der Murr (DE)

(56) Entgegenhaltungen:
WO-A1-2011/092308      WO-A1-2011/134987
WO-A1-2012/052488      DE-A1- 19 604 134
JP-A- 2009 202 678      US-A- 5 951 115

**Beschreibung**

Die Erfindung betrifft ein Verfahren zum Betreiben eines Bremssystems eines Fahrzeugs. Des Weiteren betrifft die Erfindung eine Steuervorrichtung für ein Bremssystem eines Fahrzeugs und ein Bremssystem für ein Fahrzeug.

Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Radauslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

Außerdem ist in der WO 2011/092308 A1 ein Verfahren zum Betreiben eines Bremssystems für ein Kraftfahrzeug beschrieben, wobei zum Verhindern eines Bremsdruckaufbaus in Radbremsen eines Bremskreises während einer Bremspedalbetätigung lediglich eines der den Radbremsen zugeordneten Auslassventile offen gesteuert wird, um über das offen gesteuerte Auslassventil und der zugeordneten Radbremse einen Druckspeicher zu füllen. Auf diese Weise soll durch eine reduzierte Betätigung der Auslassventile eine Lebensdauer des Bremssystems verlängerbar sein.

Ein entsprechendes Verfahren zum Betreiben eines Bremssystems wird auch in der WO 2011/134987 A1 beschrieben.

Des Weiteren beschreibt die US 5,951,115 A ein Bremssteuersystem für ein Elektrofahrzeug, welches dazu ausgelegt ist, bei einer Betätigung eines Zündschalters zu überprüfen, ob ein jeweiliger Zustand eines Getriebes des Elektrofahrzeugs, eines zum Abbremsen des Elektrofahrzeugs einsetzbaren Elektromotors und einer Batterie des Elektrofahrzeugs ein Ausführen einer regenerativen Bremsung erlauben. Wird dabei festgestellt, dass Voraussetzungen zum Ausführen einer regenerativen Bremsung nicht erfüllt sind, so wird das Elektrofahrzeug mittels eines Bremsdruckaufbaus in seinen Radbremszylindern abgebremst.

Offenbarung der Erfindung

Die Erfindung schafft ein Verfahren zum Betreiben eines Bremssystems eines Fahrzeugs mit den Merkmalen des Anspruchs 1, eine Steuervorrichtung für ein Bremssystem eines Fahrzeugs mit den Merkmalen des Anspruchs 6 und ein Bremssystem für ein Fahrzeug mit den Merkmalen des Anspruchs 7.

Vorteile der Erfindung

Die vorliegende Erfindung ermöglicht das Einstellen eines Bremsdrucks gleich dem Ansprechdruck trotz der Betätigung des an dem Hauptbremszylinder angebundenen Bremsbetätigungselements. Somit ist trotz des direkten Einbremsens des Fahrers in den Hauptbremszylinder ein Bremsdruckaufbau über den Ansprechdruck sowohl in einem ersten Bremskreis als auch in einem zweiten Bremskreis verlässlich verhinderbar/unterbindbar.

Die vorliegende Erfindung realisiert außerdem ein Verschieben von Bremsflüssigkeit aus dem Hauptbremszylinder des Bremssystems in mindestens ein Speichervolumen des mindestens einen Bremskreises lediglich über die Hinterrad-Radbremszylinder, während die Vorderrad-Radbremszylinder unbefüllt bleiben. Dies ist gewährleistet, indem zum Verschieben der Bremsflüssigkeit aus dem Hauptbremszylinder in das mindestens eine Speichervolumen die Hinterrad-Radauslassventile (und die Hinterrad-Radeinlassventile) geöffnet werden, während die Vorderrad-Radeinlassventile (zumindest zeitweise) geschlossen bleiben/werden. Somit gewährleistet die vorliegende Erfindung einen Bremsdruck von (nahezu) Null in den Vorderrad-Radbremszylindern, trotz des in den Bremskreisen vorliegenden Restbremsdrucks/ Ansprechdruck ungleich Null. Deshalb verbleiben bei einer Anwendung der vorliegenden Erfindung keine Restschleifmomente an den Vorderrad-Radbremszylindern. Damit kann die vorliegende Erfindung zum Schonen der Bremsbeläge der Vorderrad-Radbremszylinder eingesetzt werden.

Die vorliegende Erfindung nutzt zusätzlich die häufige Ausstattung von herkömmlichen Bremssystemen mit unterschiedlichen Radbremszylindern für die jeweiligen Achsen des Fahrzeugs. In der Regel werden einer Hinterachse des Fahrzeugs Hinterrad-Radbremszylinder zugeordnet, deren Konstanten signifikant kleiner als die Konstanten der einer Vorderachse des Fahrzeugs zugeordneten Vorderrad-Radbremszylinder sind. Typischerweise gilt, dass die Konstanten der Vorderrad-Radbremszylinder zumindest um einen Faktor zwischen 2 und 3 größer als die Konstanten der Hinterrad-Radbremszylinder sind. Da die Konstanten der Radbremszylinder einen Quotienten aus dem bewirkten Bremsmoment und einem in den jeweiligen Radbremszylindern vorliegenden Bremsdruck angeben, bewirkt somit der gleiche Druck in dem Hinterrad-Radbremszylindern und den Vorderrad-Radbremszylinder ein mittels der Vorderrad-Radbremszylinder erzeugtes Vorderrad-Bremsmoment, welches zumindest um einen Faktor zwischen 2 und 3 größer als ein mittels der Hinterrad-Radbremszylinder ausgelöstes Hinterrad-Bremsmoment ist. Da bei einer Anwendung der vorliegenden Erfindung in den Vorderrad-Radbremszylindern ein Bremsdruck von (nahezu) Null realisierbar ist, kann das aus dem Vorderrad-Bremsmoment und dem Hinterrad-Bremsmoment sich addierende Gesamt-Bremsmoment signifikant reduziert werden.

Das erfindungsgemäße Verfahren und die entsprechende Steuervorrichtung sind deshalb besonders für ein rekuperatives Bremssystem vorteilhaft. Durch die Verwendung der vorliegenden Erfindung für ein rekuperatives Bremssystem können während einer Rekuperation die Rekuperationseffizienz gesteigert und eine Fahrzeugbatterie somit schneller aufgeladen werden. Damit gewährleistet die vorliegende Erfindung ein Fahren eines Fahrzeugs bei einem niedrigeren Energieverbrauch und einer reduzierten Schadstoffemission. Es wird jedoch darauf hingewiesen, dass die Verwendbarkeit der vorliegenden Erfindung nicht auf rekuperative Bremssysteme limitiert ist.

In einer vorteilhaften Ausführungsform werden zumindest zeitweise während des Steuerns der Hinterrad-Radauslassventile der Hinterrad-Radbremszylinder in den geöffneten Zustand die Hinterrad-Radeinlassventile der Hinterrad-Radbremszylinder in einen geöffneten Zustand gesteuert. Somit kann das aus dem Hauptbremszylinder verdrängte Bremsflüssigkeitsvolumen verlässlich über die geöffneten Hinterrad-Radeinlassventile und die ebenfalls geöffneten Hinterrad-Radauslassventile in die Speichervolumen der Bremskreise verschoben werden.

Vorzugsweise werden während des Steuerns der Hinterrad-Radauslassventile der Hinterrad-Radbremszylinder in den geöffneten Zustand die Vorderrad-Radeinlassventile der Vorderrad-Radbremszylinder so verzögert in den geschlossenen Zustand gesteuert, dass die Vorderrad-Radbremszylinder ohne einen Bremsdruckaufbau vorbefüllt werden. Auf diese Weise kann das sogenannte Totvolumen der Vorderrad-Radbremszylinder überwunden werden. Damit ist zu einem späteren Zeitpunkt ein erwünschter Bremsdruckaufbau in den Vorderrad-Radbremszylindern schnell und verlässlich ausführbar.

Als Alternative dazu kann jedoch auch zum Begrenzen des Druckaufbaus in den Bremskreisen auf den Ansprechdruck ein gleichzeitiges Steuern der Hinterrad-Radauslassventile in den geöffneten Zustand und der Vorderrad-Radbremszylinder in den geschlossenen Zustand ausgeführt werden.

Sofern nach dem Begrenzen des Druckaufbaus in den Bremskreisen auf den Ansprechdruck ermittelt wird, dass das der Betätigungsstärke entsprechende Generator-Bremsmoment mittels des mindestens einen Elektromotors nicht mehr ausübbar ist, werden die Vorderrad-Radeinlassventile der Vorderrad-Radbremszylinder aus dem geschlossenen Zustand in einen geöffneten Zustand gesteuert. Auf diese Weise kann mittels eines Aufbaus eines Bremsdrucks in den Vorderrad-Radbremszylindern schnell und verlässlich auf eine reduzierte Einsetzbarkeit des mindestens einen Elektromotors und/oder auf einen vergleichsweise hohen Fahrerbremswunsch reagiert werden. Nach dem Steuern der Vorderrad-Radeinlassventile aus dem geschlossenen Zustand in den geöffneten Zustand wird eine $\Delta p$-Regelung mittels der Hinterrad-Radeinlassventile der Hinterrad-Radbremszylinder ausgeführt. Damit kann der Bremsdruck in den Bremskreisen exakt so eingeregelt werden, dass eine von dem Fahrer vorgegebene Soll-Verzögerung verlässlich einhaltbar ist.

Außerdem kann, sofern nach dem Steuern der Vorderrad-Radeinlassventile aus dem geschlossenen Zustand in den geöffneten Zustand ermittelt wird, dass das der Betätigungsstärke entsprechende Generator-Bremsmoment mittels des mindestens einen Elektromotors erneut ausübbar ist, der in den Bremskreisen vorliegende Bremsdruck auf den Ansprechdruck begrenzt werden, indem die Hinterrad-Radauslassventile in den geöffneten Zustand gesteuert werden. Somit kann auch in einer derartigen Situation der in den Bremskreisen vorliegende Bremsdruck verlässlich auf den Ansprechdruck reduziert werden.

Die oben aufgezählten Vorteile sind auch bei einer derartigen Steuervorrichtung für ein Bremssystem eines Fahrzeugs gewährleistet. Es wird ausdrücklich darauf hingewiesen, dass die Steuervorrichtung entsprechend der Ausführungsformen des Verfahrens zum Betreiben eines Bremssystems eines Fahrzeugs weiterbildbar ist. Außerdem sind die beschriebenen Vorteile gewährleistet bei einem Bremssystem für ein Fahrzeug mit einer derartigen Steuervorrichtung.

Kurze Beschreibung der Zeichnungen

Weitere Merkmale und Vorteile der vorliegenden Erfindung werden nachfolgend anhand der Figuren erläutert. Es zeigen:

Fig. 1     eine schematische Darstellung einer Ausführungsform der Steuervorrichtung; und

Fig. 2a bis 2d     vier Koordinatensysteme zum Darstellen einer Ausführungsform des Verfahrens zum Betreiben eines rekuperativen Bremssystems.

Ausführungsformen der Erfindung

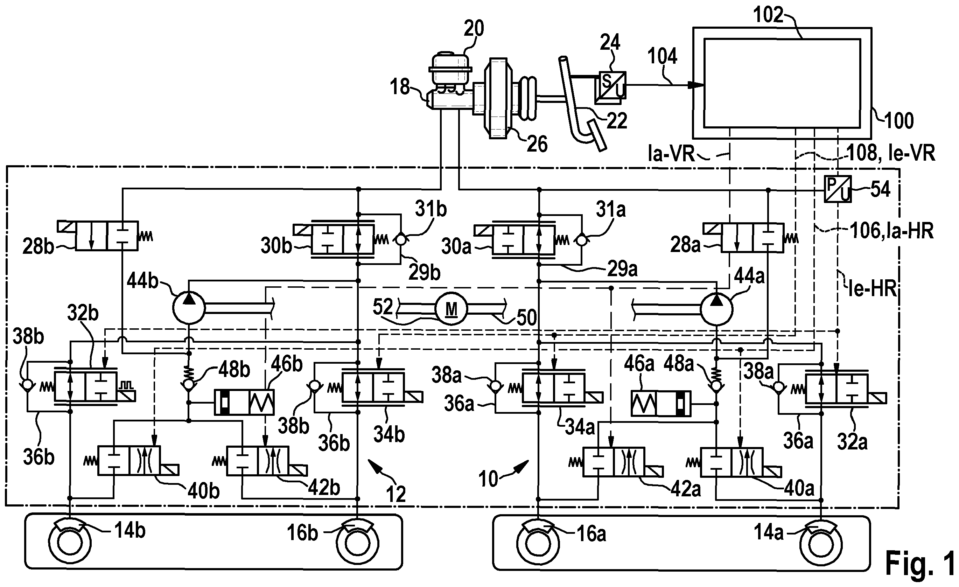

Fig. 1 zeigt eine schematische Darstellung einer Ausführungsform der Steuervorrichtung.

Die in Fig. 1 schematisch wiedergegebene Steuervorrichtung 100 und das damit zusammenwirkende Bremssystem sind erfindungsgemäß in einem Hybrid- oder in einem Elektrofahrzeug eingesetzt. Das hier beispielhaft wiedergegebene Bremssystem hat einen ersten Bremskreis 10 und einen zweiten Bremskreis 12 mit jeweils zwei Radbremszylindern 14a, 14b, 16a und 16b. Optionaler Weise weist jeder der beiden Bremskreise 10 und 12 einen Hinterrad-Radbremszylinder 14a oder 14b und einen Vorderrad-Radbremszylinder 16a und 16b auf. Das im Weiteren beschriebene Bremssystem ist jedoch nicht auf eine derartige Bremskreisaufteilung (X-Bremskreisaufteilung) beschränkt. Die einem Bremskreis 10 und 12 zugeordneten Räder können beispielsweise auch an einer gemeinsamen Achse des Fahrzeugs oder auf einer Seite des Fahrzeugs angeordnet sein.

Das Bremssystem weist einen Hauptbremszylinder 18 auf, welcher beispielsweise als Tandemhauptbremszylinder ausführbar ist. Der Hauptbremszylinder 18 kann über mindestens eine Bremsflüssigkeit-Austauschöffnung, wie beispielsweise eine Schnüffelbohrung, mit einem Bremsflüssigkeitsreservoir 20 verbunden sein. Die Einsetzbarkeit der Steuervorrichtung 100 ist jedoch nicht auf die Verwendung eines Tandemhauptbremszylinders oder auf eine bestimmte Ausbildung des Hauptbremszylinders 18 beschränkt.

Das Bremssystem weist ein an dem Hauptbremszylinder 18 angeordnetes Bremsbetätigungselement 22, wie beispielsweise ein Bremspedal, auf. Vorteilhafterweise ist das Bremsbetätigungselement 22 derart direkt oder indirekt an dem Hauptbremszylinder 18 angeordnet, dass bei einem Betätigen des Bremsbetätigungselements 22 mit zumindest einer Mindest-Bremsbetätigungsstärke eine auf das Bremsbetätigungselement 22 aufgebrachte Fahrerbremskraft auf den mindestens einen verstellbaren Kolben des Hauptbremszylinders 18, wie beispielsweise auf einen Stangenkolben und einen Schwimmkolben, so übertragbar ist, dass der mindestens eine Kolben mittels der Fahrerbremskraft verstellbar ist. Es wird mittels dieses Verstellens des mindestens einen Kolbens ein Innendruck in mindestens einer Druckkammer des Hauptbremszylinders 18 gesteigert.

Vorzugsweise umfasst das Bremssystem auch mindestens einen Bremsbetätigungselement-Sensor 24, mittels welchem die Betätigungsstärke der Betätigung des Bremsbetätigungselements 22 durch den Fahrer ermittelbar ist. Der Bremsbetätigungselement-Sensor 24 kann beispielsweise ein Pedalwegsensor, ein Differenzwegsensor und/oder ein Stangenwegsensor sein. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist auch einen Bremskraftverstärker 26 auf. Mittels des Bremskraftverstärkers 26 kann eine Verstärkerkraft so auf den mindestens einen Kolben des Hauptbremszylinders 18 ausgeübt werden, dass dem Fahrer die Betätigung des Bremsbetätigungselements 22 erleichtert wird. Der Bremskraftverstärker 26 kann insbesondere ein stetig regelbarer/stetig steuerbarer Bremskraftverstärker sein.

Das in Fig. 1 dargestellte Bremssystem weist einen elektromechanischen Bremskraftverstärker 26 auf. Ein elektromechanischer Bremskraftverstärker 26 zeichnet sich durch eine variierbare Verstärkerkraft aus. Damit ist es mittels des elektromechanischen Bremskraftverstärkers 26 möglich, die für den Fahrer wahrnehmbare Bremsbetätigungskraft während eines Bremsens auf einfache Weise zu beeinflussen. Anstelle eines elektromechanischen Bremskraftverstärkers 26 kann das mit der Steuervorrichtung 100 zusammenwirkende Bremssystem jedoch auch einen Bremskraftverstärker 26 eines anderen Typs haben.

Nachfolgend werden mit Bezug zu Fig. 1 weitere Komponenten der Ausführungsform des Bremssystems beschrieben. Es wird ausdrücklich darauf hingewiesen, dass die im Weiteren beschriebenen Komponenten des Bremssystems lediglich ein Beispiel für eine mögliche Ausbildung des vorteilhaften Bremssystems darstellen. Ein Vorteil der unten ausführlicher beschriebenen Steuervorrichtung 100 liegt darin, dass die damit zusammenwirkenden Bremskreise 10 und 12 nicht auf eine bestimmte Ausbildung oder auf das Einsetzen bestimmter Komponenten festgelegt sind. Stattdessen können die Bremskreise 10 und 12 mit einer hohen Wahlfreiheit modifiziert werden, ohne dass die Einsetzbarkeit und die Vorteile der Steuervorrichtung 100 beeinträchtigt werden:

Jeder der Bremskreise 10 und 12 ist so ausgebildet, dass der Fahrer über den Hauptbremszylinder 18 direkt in die Radbremszylinder 14a, 14b, 16a und 16b hineinbremsen kann. Jeder der Bremskreise 10 und 12 weist ein Hochdruckschaltventil 28a oder 28b und ein Umschaltventil 30a oder 30b (mit jeweils einer parallel dazu verlaufenden Bypassleitung 29a und 29b und einem in jeder Bypassleitung 29a und 29b angeordneten Rückschlagventil 31 a und 31 b) auf.

In dem ersten Bremskreis 10 sind dem Hinterrad-Radbremszylinder 14a ein Hinterrad-Radeinlassventil 32a und dem Vorderrad-Radbremszylinder 16a ein Vorderrad-Radeinlassventil 34a, jeweils mit einer parallel dazu verlaufenden Bypassleitung 36a und einem in jeder Bypassleitung 36a angeordneten Rückschlagventil 38a, zugeordnet. Zusätzlich sind ein Hinterrad-Radauslassventil 40a dem Hinterrad-Radbremszylinder 14a und ein Vorderrad-Radauslassventil 42a dem Vorderrad-Radbremszylinder 16a zugeordnet. Entsprechend sind auch in dem zweiten Bremskreis 12 ein Hinterrad-Radeinlassventil 32b dem Hinterrad-Radbremszylinder 14b und ein Vorderrad-Radeinlassventil 34b dem Vorderrad-Radbremszylinder 16b zugeordnet. Parallel zu jedem der beiden Radeinlassventile 32b und 34b des zweiten Bremskreises 12 verläuft jeweils eine Bypassleitung 36b mit einem darin angeordneten Rückschlagventil 38b. Des Weiteren sind auch in dem zweiten Bremskreis 12 ein Hinterrad-Radauslassventil 40b dem Hinterrad-Radbremszylinder 14b und ein Vorderrad-Radauslassventil 42b dem Vorderrad-Radbremszylinder 16b zugeordnet.

Außerdem umfasst jeder der Bremskreise 10 und 12 eine Pumpe 44a und 44b, deren Ansaugseite mit den Radauslassventilen 40a und 42a oder 40b und 42b verbunden ist und deren Förderseite zu den Radeinlassventilen 32a und 34a oder 32b und 34b gerichtet ist. Jeder der Bremskreise 10 und 12 weist zusätzlich noch eine zwischen den Radauslassventilen 40a und 42a oder 40b und 42b und der zugeordneten Pumpe 44a oder 44b angeordnete Speicherkammer 46a oder 46b als Speichervolumen 46a oder 46b und ein zwischen der jeweiligen Pumpe 44a oder 44b und der Speicherkammer 46a oder 46b liegendes Überdruckventil 48a oder 48b auf. Jede der Speicherkammern 46a und 46b kann insbesondere eine Niederdruckspeicherkammer sein. Es wird darauf hingewiesen, dass die Speicherkammern 46a und 46b als ESP-Speicherkammern in beiden Bremskreisen 10 und 12 nutzbar sind.

Die Pumpen 44a und 44b können auf einer gemeinsamen Welle 50 eines Motors 52 angeordnet sein. Jede der Pumpen 44a und 44b kann als Drei-Kolben-Pumpen ausgebildet sein. Anstelle von einer Drei-Kolben-Pumpe kann jedoch auch ein anderer Pumpentyp für mindestens eine der Pumpen 44a und 44b verwendet werden. Anders ausgeführte Modulationssysteme, wie z. B. Pumpen mit mehreren oder weniger Kolben, asymmetrische Pumpen oder Zahnradpumpen sind ebenfalls einsetzbar. Das mit der Steuervorrichtung 100 zusammenwirkende Bremssystem ist somit als ein modifiziertes Standard-Modulationssystem, insbesondere als Sechs-Kolben-ESP-System, ausführbar.

Außerdem kann jeder der beiden Bremskreise 10 und 12 noch mindestens einen Drucksensor 54, insbesondere zum Ermitteln eines Vordrucks und/oder eines Kreisdrucks, umfassen.

Das oben beschriebene Bremssystem ist mittels der im Weiteren ausgeführten Steuervorrichtung 100 ansteuerbar. Es wird jedoch nochmals darauf hingewiesen, dass die Einsetzbarkeit der im Weiteren beschriebenen Steuervorrichtung 100 nicht auf das Zusammenwirken mit einem derart ausgebildeten Bremssystem limitiert ist.

Die im Weiteren beschriebene Steuervorrichtung 100 kann insbesondere in eine Steuerelektronik des Bremssystems integriert sein. Es wird jedoch darauf hingewiesen, dass die Ausbildbarkeit der Steuervorrichtung 100 nicht auf eine derartige Integration limitiert ist. Beispielsweise kann die Steuervorrichtung 100 auch zusammen mit einer getrennt ausgebildeten und angeordneten Steuerelektronik des Bremssystems eingesetzt werden.

Die Steuervorrichtung 100 umfasst eine Ansteuereinrichtung 102, mittels welcher zumindest die Hinterrad-Radauslassventile 40a und 40b und die Vorderrad-Radeinlassventile 34a und 34b der beiden Bremskreise 10 und 12 ansteuerbar sind. Das Ansteuern der Hinterrad-Radauslassventile 40a und 40b und der Vorderrad-Radeinlassventile 34a und 34b der beiden Bremskreise 10 und 12 durch die Ansteuereinrichtung 102 erfolgt unter Berücksichtigung zumindest eines bereitgestellten Sensorsignals 104 bezüglich einer Betätigungsstärke einer Betätigung des an dem Hauptbremszylinder 18 angebundenen Bremsbetätigungselements 22 durch einen Fahrer des Fahrzeugs. Das Sensorsignal 104 kann insbesondere von dem oben schon erwähnten Bremsbetätigungselement-Sensor 24 bereitgestellt sein. Die bei der Ansteuerung berücksichtigte Betätigungsstärke ist beispielsweise eine ermittelte Fahrerbremskraft, ein Fahrerbremsdruck und/oder ein Betätigungsweg/Verstellweg des Bremsbetätigungselements 22, wie insbesondere ein Stangenweg. Die hier aufgezählten Möglichkeiten für die Betätigungsstärke sind jedoch nur beispielhaft zu interpretieren.

Die Hinterrad-Radauslassventile 40a und 40b der Hinterrad-Radbremszylinder 14a und 14b, welche jeweils einem Hinterrad des Fahrzeugs zugeordnet sind, sind mittels mindestens eines ersten Steuersignals 106 der Ansteuereinrichtung 102 in einen geöffneten Zustand steuerbar. Zumindest zeitweise während des Bereitstellens des mindestens einen ersten Steuersignals 106 an die Hinterrad-Radauslassventile 40a und 40b sind die Vorderrad-Radeinlassventile 34a und 34b der Vorderrad-Radbremszylinder 16a und 16b, welche jeweils einem Vorderrad des Fahrzeugs zugeordnet sind, mittels mindestens eines zweiten Steuersignals 108 der Ansteuereinrichtung 102 in einen geschlossenen Zustand steuerbar. Über die mittels des ersten Steuersignals 106 der Ansteuereinrichtung 102 in den geöffneten Zustand gesteuerten Hinterrad-Radauslassventile 40a und 40b der Hinterrad-Radbremszylinder 14a und 14b (und über die zumindest teilgeöffneten Hinterrad-Radeinlassventile 32a und 32b der Hinterrad-Radbremszylinder 14a und 14b) kann Bremsflüssigkeit in die Speichervolumen/Speicherkammern 46a und 46b verschoben werden. Auf diese Weise ist ein Bremsdruckaufbau in den Bremskreisen 10 und 12 trotz einer (aufgrund einer Betätigung des Bremsbetätigungselements 22) aus dem Hauptbremszylinder 18 in die Bremskreise 10 und 12 verschobenen Bremsflüssigkeit auf einen Ansprechdruck der Speicherkammern/Speichervolumen 46a und 46b der Bremskreise 10 und 12 begrenzbar. Gleichzeitig ist durch das zumindest zeitweise Steuern der Vorderrad-Radeinlassventile 34a und 34b der Vorderrad-Radbremszylinder 16a und 16b in den geschlossenen Zustand mittels des mindestens einen zweiten Steuersignals 108 der Ansteuereinrichtung 102 ein Bremsdruck von (nahezu) Null in den Vorderrad-Radbremszylindern 16a und 16b gewährleistbar.

Während des Verschiebens von Bremsflüssigkeit in die Speichervolumen/Speicherkammern 46a und 46b liegt somit in den Hinterrad-Radbremszylindern 14a und 14b ein Bremsdruck (ungefähr) gleich dem Ansprechdruck vor, während in den Vorderrad-Radbremszylindern 16a und 16b ein Bremsdruck von (nahezu) Null vorliegt. Auch in einer Zwischenzeit, zwischen dem Verschiebens von Bremsflüssigkeit in die Speichervolumen/Speicherkammern 46a und 46b und einem späteren (erwünschten) Druckaufbau in den Bremskreisen 10 und 12, ist der Bremsdruck in den Hinterrad-Radbremszylindern 14a und 14b (ungefähr) gleich dem Ansprechdruck, während in den Vorderrad-Radbremszylindern 16a und 16b ein Bremsdruck von (nahezu) Null realisiert ist.

Während des Verschiebens von Bremsflüssigkeit in die Speichervolumen 46a und 46b und der Zwischenzeit wirkt somit lediglich ein dem Ansprechdruck entsprechendes Hinterrad-Bremsmoment auf die Hinterräder, wobei gleichzeitig ein Vorderrad-Bremsmoment von (nahezu) Null an den Vorderrädern vorliegt. Das resultierende "hydraulische" Bremsmoment aus dem Hinterrad-Bremsmoment und dem Vorderrad-Bremsmoment ist somit vergleichsweise niedrig.

Die Steuervorrichtung 100 nutzt zusätzlich die Tatsache aus, dass in der Regel unterschiedliche Typen von Radbremszylindern 14a, 14b, 16a und 16b an den verschiedenen Achsen eines Fahrzeugs eingesetzt werden. Im Allgemeinen gilt für das auf die Hinterräder ausgeübte Hinterrad-Bremsmoment $M_{HR}$:

$$(\text{Gl. 1}) \; M_{HR} = 2 * p * c_{HR} \, ,$$

wobei $p$ der in den Hinterrad-Radbremszylindern 14a und 14b vorliegende Bremsdruck und $c_{HR}$ die Konstante der Hinterrad-Radbremszylinder 14a und 14b ist.

Entsprechend gilt häufig für das auf die Vorderräder ausgeübte Vorderrad-Bremsmoment $M_{VR}$:

$$(\text{Gl. 2}) \; M_{VR} = 2 * p * c_{VR} \, ,$$

wobei $p$ der in den Vorderrad-Radbremszylindern 16a und 16b vorliegende Bremsdruck und $c_{VR}$ die Konstante der Vorderrad-Radbremszylinder 16a und 16b ist.

Im Allgemeinen gilt:

$$(\text{Gl. 3}) \; c_{VR} \geq 2 * c_{HR}$$

Das Ansteuern der Hinterrad-Radauslassventile 40a und 40b der Hinterrad-Radbremszylinder 14a und 14b mit dem mindestens einen ersten Steuersignal 106 und das zumindest zeitweise währenddessen ausgeführte Ansteuern der Vorderrad-Radeinlassventile 34a und 34b der Vorderrad-Radbremszylinder 16a und 16b mit dem mindestens einen zweiten Steuersignal 108 bewirkt somit ein "hydraulisches" Bremsmoment $M_h$:

$$(\text{Gl. 4}) \; M_h = 2 * p * c_{HR} \, ,$$

Würden anstelle der Hinterrad-Radauslassventile 40a und 40b die Vorderrad-Radauslassventile 42a und 42b zum Verschieben der Bremsflüssigkeit eingesetzt werden, so würde gelten:

$$(\text{Gl. 5}) \; M_h \geq 4 * p * c_{HR}$$

Das trotz der Betätigung des Bremsbetätigungselements in Gleichung (Gl.4) angegebene niedrige "hydraulische" Bremsmoment $M_h$ kann für eine Steigerung eines mittels mindestens eines (nicht skizzierten) Elektromotors ausgeführten Generator-Bremsmoments genutzt werden. Somit kann eine Batterie des mit dem Bremssystem ausgestatteten Fahrzeugs schneller aufgeladen werden, ohne dass während des Aufladevorgangs eine von einem Fahrer mittels einer Betätigung des Bremsbetätigungselements 22 vorgegebene Fahrzeugverzögerung überschritten wird.

Das mit der Steuervorrichtung 100 ausgestattete Bremssystem vereint somit die Vorteile einer hohen Rekuperationseffizienz mit der Ausführbarkeit einer Verblendung. Außerdem ist es mittels des Einsetzens der Steuervorrichtung 100 möglich, die Verblendung ohne für den Fahrer spürbare Rückwirkungen am Bremsbetätigungselement 22 auszuführen.

Es wird ausdrücklich darauf hingewiesen, dass bei einer Verwendung der Steuervorrichtung 100 eine Höhe des Ansprechdrucks der als Speichervolumen 46a und 46b der Bremskreise 10 und 12 genutzten Speicherkammern 46a und 46b an Bedeutung verliert. Der Ansprechdruck der Speichervolumen 46a und 46b der Bremskreise 10 und 12 kann somit auch vergleichsweise hoch sein, ohne dass das aus dem Ansprechdruck Restdruck resultierende "hydraulische" Bremsmoment $M_h$ signifikant groß wird. Somit können auch kostengünstige Speichervolumen 46a und 46b zusammen mit der Steuervorrichtung 100 eingesetzt werden.

Des Weiteren kann durch das Steuern der Vorderrad-Radeinlassventile 34a und 34b der Vorderrad-Radbremszylinder 16a und 16b in den geschlossenen Zustand mittels des mindestens einen zweiten Steuersignals 108 der Ansteuereinrichtung 102 ein Verschleiß von deren Bremsbelägen verhindert/hinausgezögert werden. Damit kann die Steuervorrichtung 100 auch zum Schonen der Bremsbeläge eingesetzt werden.

Außerdem kann die Steuervorrichtung 100 zusätzlich dazu ausgelegt sein, die im Weiteren beschriebenen Verfahrensschritte auszuführen. Insbesondere können die unten ausgeführten Steuersignale Ie-HR, Ie-VR, Ia-Hr und Ia-VR von der Steuervorrichtung 100 ausgebbar sein, wobei das Steuersignal Ie-HR an die Hinterrad-Radeinlassventile 32a und 32b, das Steuersignal Ie-VR (als zweites Steuersignal 108) an die Vorderrad-Radeinlassventile 34a und 34b, das Steuersignal Ia-HR (als erstes Steuersignal 106) an die Hinterrad-Radauslassventile 40a und 40b und das Steuersignal Ia-VR an die Vorderrad-Radauslassventile 42a und 42b ausgebbar sind/ausgegeben werden. Auf eine genauere Beschreibung weiterer realisierbarer Funktionsweisen der Steuervorrichtung 100 wird deshalb hier verzichtet.

Die oben beschriebenen Vorteile sind auch bei einem Bremssystem für ein Fahrzeug mit der Steuervorrichtung 100, bzw. mit einer entsprechenden Weiterbildung der Steuervorrichtung 100, realisiert. Es wird ausdrücklich darauf hingewiesen, dass bei dem Bremssystem die Steuervorrichtung 100 nicht nur zur Ausgabe zumindest der Steuersignale ausgebildet ist. Stattdessen ist die Steuervorrichtung 100 zumindest mit den Ventilen 34a, 34b, 40a und 40b so verschaltet, dass (während eines Betriebs des Bremssystems) zumindest das erste Steuersignal 106 an die Hinterrad-Radauslassventile 40a und 40b und das zweite Steuersignal 108 an die Vorderrad-Radeinlassventile 34a und 34b ausgebbar sind/ausgegeben werden. In einer vorteilhaften Weiterbildung weist das Bremssystems eine Verschaltung auf, welche gewährleistet, dass das Steuersignal Ie-HR an die Hinterrad-Radeinlassventile 32a und 32b, das Steuersignal Ie-VR (als zweites Steuersignal 108) an die Vorderrad-Radeinlassventile 34a und 34b, das Steuersignal Ia-HR (als erstes Steuersignal 106) an die Hinterrad-Radauslassventile 40a und 40b und das Steuersignal Ia-VR an die Vorderrad-Radauslassventile 42a und 42b ausgebbar sind/ausgegeben werden.

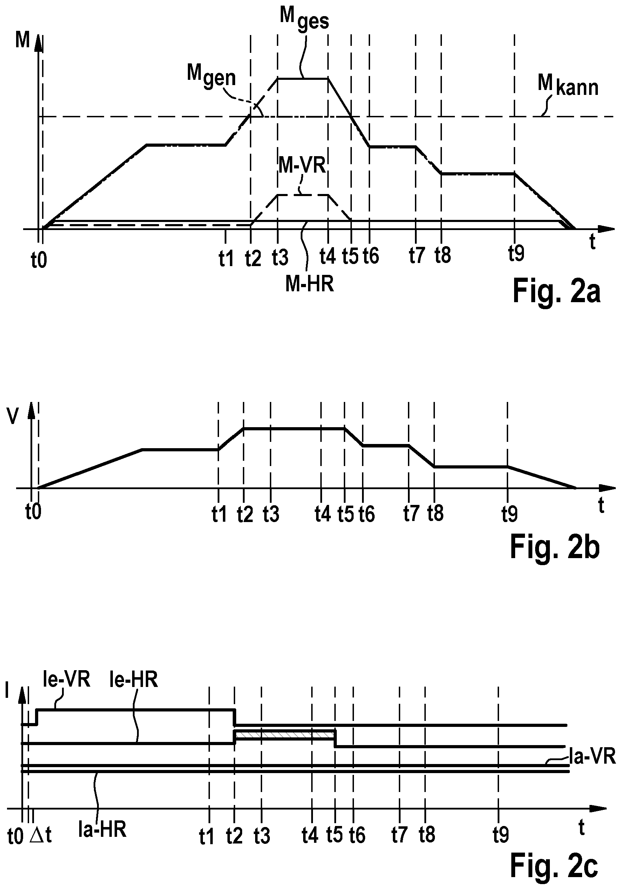

Fig. 2a bis 2c zeigen drei Koordinatensysteme zum Darstellen einer Ausführungsform des Verfahrens zum Betreiben eines Bremssystems eines Fahrzeugs.

Der besseren Anschaulichkeit wegen wird das Verfahren unter Verwendung des oben erläuterten rekuperativen Bremssystems beschrieben. Die Ausführbarkeit des Verfahrens ist jedoch nicht auf die Verwendung des oben beschriebenen Bremssystems limitiert.

Bei den Koordinatensystemen der Fig. 2a bis 2c ist die Abszisse die Zeitachse t. Die Ordinate des Koordinatensystems der Fig. 2a gibt ein Bremsmoment M wieder. Die Ordinate des Koordinatensystems der Fig. 2b ist ein Speichervolumen V, welches in den Speicherkammern/Speichervolumen der Bremskreise zwischengespeichert ist. Eine (normierte) Stromstärke I ist mittels der Ordinate des Koordinatensystems der Fig. 2c angezeigt.

Bis zu einem Zeitpunkt t0 übt der Fahrer keine Kraft auf das Bremsbetätigungselement auf. Somit liegt das Bremsbetätigungselement des mittels des Verfahrens betriebenen Bremssystems bis zum Zeitpunkt t0 in seiner Ausgangsstellung/Nicht-Betätigungstellung vor.

Ab dem Zeitpunkt t0 übt der Fahrer eine zunehmende Kraft auf das Bremsbetätigungselement aus, wodurch dieses verstellt wird. Zwischen den Zeiten t0 und t1 liegt das vom Fahrer angeforderte Soll-Gesamt-Bremsmoment Mges jedoch unter einem mittels mindestens eines Elektromotors maximal ausführbaren Kann-Generator-Bremsmoment Mkann. Somit kann zwischen den Zeiten t0 und t1 das (ausgeführte) Generator-Bremsmoment Mgen entsprechend dem Soll-Gesamt-Bremsmoment Mges eingestellt werden und der komplette Fahrerbremswunsch rein regenerativ erfüllt werden.

Zum Ausführen des rein regenerativen Bremsens wird während der Zeiten t0 und t1 ein Bremsdruckaufbau in den Bremskreisen des Bremssystems trotz der Betätigung des an dem Hauptbremszylinder des Bremssystem angeordneten Bremsbetätigungselements durch den Fahrer des Fahrzeugs auf einen Ansprechdruck der Speicherkammern/Speichervolumen der Bremskreise begrenzt. Dies geschieht durch ein Steuern der Hinterrad-Radauslassventile der Hinterrad-Radbremszylinder, welche jeweils einem Hinterrad des Fahrzeugs zugeordnet sind, in den geöffneten Zustand. Demgegenüber werden zumindest zeitweise während des Steuerns der Hinterrad-Radauslassventile in den geöffneten Zustand die Vorderrad-Radeinlassventile der Vorderrad-Radbremszylinder, welche jeweils einem Vorderrad des Fahrzeugs zugeordnet sind, in einen geschlossenen Zustand gesteuert. Auf diese Weise kann trotz einer aus dem Hauptbremszylinder des Bremssystems in die Bremskreise verschobenen Bremsflüssigkeit einem Bremsdruckaufbau über den Ansprechdruck der Speicherkammern/Speichervolumen erfolgreich entgegengewirkt werden.

Während der Zeiten t0 und t1 verschiebt der Fahrer somit ein Bremsflüssigkeitsvolumen aus dem Hauptbremszylinder in die Speicherkammern, wodurch das Speichervolumen V zunimmt. Somit liegt zwischen den Zeiten t0 und t1 in den Hinterrad-Radbremszylindern ein Bremsdruck gleich dem Ansprechdruck der Speicherkammern/Speichervolumen und in den Vorderrad-Radbremszylindern ein Bremsdruck von (nahezu) Null vor. Die Hinterrad-Radbremszylinder bewirkten somit zwischen den Zeiten t0 und t1 ein Hinterrad-Bremsmoment M-HR gleich einem "Ansprechdruck-Bremsmoment". Ein Vorderrad-Bremsmoment M-VR der Vorderrad-Radbremszylinder liegt zwischen den Zeiten t0 und t1 bei (nahezu) Null. Während der Zeiten t0 und t1 kann somit aufgrund des bewirkten Begrenzens des Druckaufbaus in den Bremskreisen ein vergleichsweise hohes Generator-Bremsmoment Mgen mittels des mindestens einen Elektromotors auf das Fahrzeug ausgeübt werden. Trotz des Ausübens des hohen Generator-Bremsmoments Mgen ist aufgrund der zuvor beschriebenen Verfahrensschritte verlässlich gewährleistet, dass das von dem Fahrer mittels der Bremsbetätigung vorgegebene Soll-Gesamt-Bremsmoment Mges nicht überschritten wird.

Bei einer Ausbildung der Hinterrad-Radauslassventile der Hinterrad-Radbremszylinder der Bremskreise als stromlos geschlossene Ventile wird ein Steuersignal Ia-HR ungleich Null zwischen den Zeiten t0 und t1 (als erstes Steuersignal) an die Hinterrad-Radauslassventile ausgegeben. Vorteilhafterweise werden zumindest zeitweise während des Steuerns der Hinterrad-Radauslassventile der Hinterrad-Radbremszylinder in den geöffneten Zustand die Hinterrad-Radeinlassventile der Hinterrad-Radbremszylinder auch in einen geöffneten Zustand gesteuert. Zum Steuern der Hinterrad-Radeinlassventile der Hinterrad-Radbremszylinder in den geöffneten Zustand kann bei einer Ausbildung von diesen als stromlos offene Ventile ein Steuersignal Ie-HR gleich Null an die Hinterrad-Radeinlassventile der Hinterrad-Radbremszylinder ausgegeben werden. Bei einer Ausbildung der Vorderrad-Radeinlassventile der Vorderrad-Radbremszylinder als stromlos offene Ventile wird ein Steuersignal Ie-VR ungleich Null zwischen den Zeiten t0 und t1 (als zweites Steuersignal) an die Vorderrad-Radeinlassventile bereitgestellt. Vorzugsweise sind auch die Vorderrad-Radauslassventile der Vorderrad-Radbremszylinder der beiden Bremskreise zwischen den Zeiten t0 und t1 geschlossen. Sofern die Vorderrad-Radauslassventile der Vorderrad-Radbremszylinder stromlos geschlossene Ventile sind, ist dies mittels eines Steuersignals Ia-VR gleich Null realisierbar.

In einer vorteilhaften Ausführungsform des Verfahrens werden die Vorderrad-Radeinlassventile der Vorderrad-Radbremszylinder (gleichzeitig/während des Steuerns der Hinterrad-Radauslassventile in den geöffneten Zustand) zum Begrenzen des Druckaufbaus in den Bremskreisen auf den Ansprechdruck so verzögert in den geschlossenen Zustand gesteuert, dass die Vorderrad-Radbremszylinder ohne einen Bremsdruckaufbau vorgefüllt werden. Auf diese Weise kann vor dem Schließen der Vorderrad-Radeinlassventile der Vorderrad-Radbremszylinder ein Totvolumen überwunden werden. Durch das Vorbefüllen der Vorderrad-Radbremszylinder ist verhinderbar, dass bei einem späteren Öffnen der Vorderrad-Radeinlassventile ein in den Bremskreisen vorliegender Bremsdruck/Restdruck schlagartig zusammenbricht. Ein derartiges plötzliches Zusammenbrechen eines Bremsdrucks/Restdrucks ist für einen Fahrer während einer Betätigung des Bremsbetätigungselements oft spürbar, und wird von diesem als unvorteilhaft wahrgenommen. Durch das Vorbefüllen der Vorderrad-Radbremszylinder ist diese Komfortbeeinträchtigung jedoch verlässlich unterbindbar. Des Weiteren wird durch das verzögerte Schließen der Vorderrad-Radeinlassventile sichergestellt, dass nicht unnötig viel Speichervolumen V in den Speicherkammern/Speichervolumen zu lagern ist. Auf diese Weise kann auch eine Lebensdauerlast der Speicherkammern/Speichervolumen reduziert und eine Lebensdauer/Einsetzdauer der Speicherkammern/Speichervolumen gesteigert werden.

Unter dem verzögerten Steuern der Vorderrad-Radbremszylinder in den geschlossenen Zustand kann verstanden werden, dass die Vorderrad-Radbremszylinder für eine kurze Verzögerungszeit Δt in den offenen Zustand belassen werden. Unmittelbar nach der Verzögerungszeit Δt werden Vorderrad-Radbremszylinder in den geschlossenen Zustand gesteuert. Mit Ausnahme der Verzögerungszeit Δt wird somit während des Steuerns der Hinterrad-Radauslassventile in den geöffneten Zustand gewährleistet, dass die Vorderrad-Radbremszylinder in den geschlossenen Zustand vorliegen. Als Alternative zu einem verzögerten Steuern der Vorderrad-Radbremszylinder in den geschlossenen Zustand kann jedoch auch ein gleichzeitiges Steuern der Hinterrad-Radauslassventile in den geöffneten Zustand und der Vorderrad-Radbremszylinder in den geschlossenen Zustand ausgeführt werden.

Bevorzugter Weise wird deshalb die Steigerung des Steuersignals Ie-VR von 0 auf 1 zum Schließen der Vorderrad-Radeinlassventile unter Berücksichtigung eines bereitgestellten Sensorsignals eines Bremsbetätigungselements-Sensors, wie beispielsweise eines Pedalwegsensors, ausgeführt. Anhand eines Sensorsignals eines Bremsbetätigungselements-Sensors kann das bereits aus dem Hauptbremszylinder in die Bremskreise, und insbesondere in die Vorderrad-Radbremszylinder, verschobene Bremsflüssigkeitsvolumen ermittelt/geschätzt werden. Erst wenn ein Bremsflüssigkeitsvolumen entsprechend dem typischen, initialen Totvolumen in die Vorderrad-Radbremszylinder verschoben ist, kann somit mit dem Schließen der Vorderrad-Radeinlassventile der Vorderrad-Radbremszylinder begonnen werden. Auf diese Weise ist verlässlich sicherstellbar, dass trotz des (leichten) Befüllens der Vorderrad-Radbremszylinder in diesen noch kein Bremsdruck aufgebaut wird. Gleichzeitig ist gewährleistbar, dass bei einem späteren Öffnen der Vorderrad-Radeinlassventile der in den Bremskreisen vorliegende Bremsdruck/Restdruck nicht zusammenbricht. Erfindungsgemäß wird vor dem Begrenzen des Druckaufbaus in den Bremskreisen auf den Ansprechdruck ermittelt, ob ein einer Betätigungsstärke der Betätigung des Bremsbetätigungselements entsprechendes Generator-Bremsmoment Mgen mittels des mindestens einen Elektromotors des Fahrzeugs ausübbar ist. Das Begrenzen des Druckaufbaus in den Bremskreisen auf den Ansprechdruck wird gegebenenfalls nur ausgeführt, sofern das der Betätigungsstärke entsprechende Generator-Bremsmoment Mgen mittels des mindestens einen Elektromotors auch ausübbar ist.

Es wird auch darauf hingewiesen, dass bei einem Bremssystem mit einer X-Bremskreisaufteilung ein vergleichsweise großes maximal ausführbares Kann-Generator-Bremsmoment Mkann in der Regel vorliegt. Somit können die während der Zeiten t0 und t1 beschriebenen Vorteile häufig für den gesamten Verlauf der Bremsvorgänge genutzt werden.

Sofern nach dem Begrenzen des Druckaufbaus in den Bremskreisen auf den Ansprechdruck ermittelt wird, dass das der Betätigungsstärke entsprechende Generator-Bremsmoment Mgen mittels des mindestens einen Elektromotors nicht mehr ausübbar ist, kann die folgende Vorgehensweise ausgeführt werden, um das Fahrzeug trotzdem verlässlich abzubremsen:

Ab der Zeit t2 nähert sich das von dem Fahrer vorgegebene steigende Soll-Gesamt-Bremsmoment Mges dem maximal ausführbaren Kann-Generator-Bremsmoment Mkann an. Um dem Fahrer weiterhin ein standardgemäßes Bremsbetätigungsgefühl/Pedalgefühl zu geben, wird deshalb ab der Zeit t2 ein Bremsdruckaufbau in den Vorderrad-Radbremszylindern ausgeführt. Dazu werden die Vorderrad-Radeinlassventile der Vorderrad-Radbremszylinder aus dem geschlossenen Zustand in einen geöffneten Zustand gesteuert. Auf diese Weise kann mittels eines weiteren Betätigens des Bremsbetätigungselements durch den Fahrer ein Bremsdruckaufbau in den Vorderrad-Radbremszylindern bewirkt werden. Die Vorderrad-Radbremszylinder bewirken somit ab der Zeit t1 ein Vorderrad-Bremsmoment M-VR ungleich 0. Sofern die Betätigungsstärke der Betätigung des Bremsbetätigungselements ab der Zeit t2 konstant bleibt, steigt auch das mittels der Vorderrad-Radbremszylinder bewirkte Vorderrad-Bremsmoment M-VR nicht an. Eine Abnahme der Betätigungsstärke ab der Zeit t3 bewirkt auch eine entsprechende Abnahme des Vorderrad-Bremsmoments M-VR.

Durch die Verwendung der Vorderrad-Radbremszylinder zum Aufbringen des Vorderrad-Bremsmoments M-VR zusätzlich zu dem Generator-Bremsmoment Mgen ist gewährleistbar, dass die vergleichsweise große Konstante der Vorderrad-Radbremszylinder zum Einhalten der von dem Fahrer vorgegebenen Soll-Fahrzeugverzögerung Mges nutzbar ist.

Bevorzugter Weise wird nach dem Steuern der Vorderrad-Radeinlassventile zwischen den Zeiten t1 bis t4 aus dem geschlossenen Zustand in den geöffneten Zustand eine Δp-Regelung mittels der Hinterrad-Radeinlassventile der Hinterrad-Radbremszylinder ausgeführt. Auf diese Weise ist das Vorderrad-Bremsmoment M-VR genau auf einen bevorzugten Wert einstellbar.

Sofern nach dem Steuern der Vorderrad-Radeinlassventile aus dem geschlossenen Zustand in den geöffneten Zustand ermittelt wird, dass das der Betätigungsstärke entsprechende Generator-Bremsmoment Mgen mittels des mindestens einen Elektromotors erneut ausübbar ist, kann der in den Bremskreisen vorliegende Bremsdruck wieder auf den Ansprechdruck begrenzt werden. Dies wird beispielsweise nach der Zeit t4 ausgeführt, nachdem das vom Fahrer angeforderte Soll-Gesamt-Bremsmoment Mges unter das maximal ausführbare Kann-Generator-Bremsmoment Mkann fällt. Zum Begrenzen des in den Bremskreisen vorliegenden Bremsdrucks auf den Ansprechdruck werden lediglich die Hinterrad-Radauslassventile in den geöffneten Zustand gesteuert. Die Vorderrad-Radeinlassventile können auch nach der Zeit t4 in dem geöffneten Zustand belassen werden. Bis zu einer Zeit t5, ab welcher der Fahrer die Betätigung des Bremsbetätigungselements beendet, liegt somit in allen Radbremszylindern lediglich der Ansprechdruck der Speichervolumen vor.

**Patentansprüche**

1.  Verfahren zum Betreiben eines Bremssystems eines Fahrzeugs mit dem Schritt:

Begrenzen eines Bremsdruckaufbaus zumindest in einem Bremskreis (10,12) des Bremssystems auf einen Ansprechdruck eines Speichervolumens (46a, 46b) des mindestens einen Bremskreises (10,12) zumindest zeitweise während einer Betätigung eines an einem Hauptbremszylinder (18) des Bremssystems angebundenen Bremsbetätigungselements (22) durch einen Fahrer des Fahrzeugs durch Steuern mindestens eines Radauslassventils (40a, 40b) mindestens eines Radbremszylinders (14a, 14b) des mindestens einen Bremskreises (10, 12) in einen geöffneten Zustand; wobei die Hinterrad-Radauslassventile (40a, 40b) der Hinterrad-Radbremszylinder (14a, 14b), welche jeweils einem Hinterrad des Fahrzeugs zugeordnet sind, zumindest zeitweise während der Betätigung des Bremsbetätigungselements (22) in den geöffneten Zustand gesteuert werden, und zumindest zeitweise während des Steuerns der Hinterrad-Radauslassventile (40a, 40b) der Hinterrad-Radbremszylinder (14a, 14b) in den geöffneten Zustand die Vorderrad-Radeinlassventile (34a, 34b) der Vorderrad-Radbremszylinder (16a, 16b), welche jeweils einem Vorderrad des Fahrzeugs zugeordnet sind, in einen geschlossenen Zustand gesteuert werden;

wobei vor dem Begrenzen des Druckaufbaus in den Bremskreisen (10, 12) auf den Ansprechdruck ermittelt wird, ob ein einer Betätigungsstärke der Betätigung des Bremsbetätigungselements (22) entsprechendes Generator-Bremsmoment (Mgen) mittels mindestens eines Elektromotors des Fahrzeugs ausübbar ist, und das Begrenzen des Druckaufbaus in den Bremskreisen (10, 12) auf den Ansprechdruck nur ausgeführt wird, sofern das der Betätigungsstärke entsprechende Generator-Bremsmoment (Mgen) mittels des mindestens einen Elektromotors ausübbar ist; und

wobei, sofern nach dem Begrenzen des Druckaufbaus in den Bremskreisen (10, 12) auf den Ansprechdruck ermittelt wird, dass das der Betätigungsstärke entsprechende Generator-Bremsmoment (Mgen) mittels des mindestens einen Elektromotors nicht mehr ausübbar ist, die Vorderrad-Radeinlassventile (34a, 34b) der Vorderrad-Radbremszylinder (16a, 16b) aus dem geschlossenen Zustand in einen geöffneten Zustand gesteuert werden, wodurch mittels einer weiteren Betätigung des Bremsbetätigungselements (22) durch den Fahrer ein Bremsdruckaufbau in den Vorderrad-Radbremszylinder (16a, 16b) bewirkbar wird, und nach einem Steuern der Vorderrad-Radeinlassventile (34a, 34b) aus dem geschlossenen Zustand in den geöffneten Zustand eine Δp-Regelung mittels der Hinterrad-Radeinlassventile (40a, 40b) der Hinterrad-Radbremszylinder (14a, 14b) ausgeführt wird, um ein Vorderrad-Bremsmoment (M-VR) der Vorderrad-Radbremszylinder (16a, 16b) einzustellen.

2. Verfahren nach Anspruch 1, wobei zumindest zeitweise während des Steuerns der Hinterrad-Radauslassventile (40a, 40b) der Hinterrad-Radbremszylinder (14a, 14b) in den geöffneten Zustand die Hinterrad-Radeinlassventile (32a, 32b) der Hinterrad-Radbremszylinder (14a, 14b) in einen geöffneten Zustand gesteuert werden.

3. Verfahren nach Anspruch 1 oder 2, wobei während des Steuerns der Hinterrad-Radauslassventile (40a, 40b) der Hinterrad-Radbremszylinder (14a, 14b) in den geöffneten Zustand die Vorderrad-Radeinlassventile (34a, 34b) der Vorderrad-Radbremszylinder (16a, 16b) so verzögert in den geschlossenen Zustand gesteuert werden, dass die Vorderrad-Radbremszylinder (16a, 16b) ohne einen Bremsdruckaufbau vorbefüllt werden.

4. Verfahren nach Anspruch 1 oder 2, wobei zum Begrenzen des Druckaufbaus in den Bremskreisen (10, 12) auf den Ansprechdruck ein gleichzeitiges Steuern der Hinterrad-Radauslassventile (40a, 40b) in den geöffneten Zustand und der Vorderrad-Radbremszylinder (34a, 34b) in den geschlossenen Zustand ausgeführt wird.

5. Verfahren nach einem der vorhergehenden Ansprüche, wobei, sofern nach dem Steuern der Vorderrad-Radeinlassventile (34a, 34b) aus dem geschlossenen Zustand in den geöffneten Zustand ermittelt wird, dass das der Betätigungsstärke entsprechende Generator-Bremsmoment (Mgen) mittels des mindestens einen Elektromotors erneut ausübbar ist, der in den Bremskreisen (10, 12) vorliegende Bremsdruck auf den Ansprechdruck begrenzt wird, indem die Hinterrad-Radauslassventile (40a, 40b) in den geöffneten Zustand gesteuert werden.

6. Steuervorrichtung (100) für ein Bremssystem eines Fahrzeugs mit:

einer Ansteuereinrichtung (102), mittels welcher mindestens ein Radauslassventil (40a, 40b) eines Radbremszylinders (14a, 14b) mindestens eines Bremskreises (10,12) des Bremssystems unter Berücksichtigung zumindest eines bereitgestellten Sensorsignals (104) bezüglich einer Betätigungsstärke einer Betätigung eines an einem Hauptbremszylinder (18) des Bremssystems angebundenen Bremsbetätigungselements (22) durch einen Fahrer des Fahrzeugs in einen geöffneten Zustand steuerbar ist, so dass ein Bremsdruckaufbau zumindest in dem mindestens einen Bremskreis (10, 12) zumindest zeitweise während einer Betätigung des Bremsbetätigungselements (22) auf einen Ansprechdruck eines Speichervolumens (46a, 46b) des mindestens einen Bremskreises (10, 12) begrenzbar ist; wobei die Ansteuereinrichtung (102) zusätzlich dazu ausgelegt ist, zumindest zeitweise während der Betätigung des Bremsbetätigungselements (22) die Hinterrad-Radauslassventile (40a, 40b) der Hinterrad-Radbremszylinder (14a, 14b), welche jeweils einem Hinterrad des Fahrzeugs zugeordnet sind, mittels mindestens eines ersten Steuersignals (106, la-HR) in den geöffneten Zustand zu steuern, und zumindest zeitweise während des Bereitstellens des mindestens einen ersten Steuersignals (106, la-HR) an die Hinterrad-Radauslassventile (40a, 40b) die Vorderrad-Radeinlassventile (34a, 34b) der Vorderrad-Radbremszylinder (16a, 16b), welche jeweils einem Vorderrad des Fahrzeugs zugeordnet sind, mittels mindestens eines zweiten Steuersignals (108, le-VR) in einen geschlossenen Zustand zu steuern; **dadurch gekennzeichnet, dass** die Ansteuereinrichtung (102) zusätzlich dazu ausgelegt ist, vor einem Ausgeben des mindestens einen ersten Steuersignals (106, la-HR) und des mindestens einen zweiten Steuersignals (108, le-VR) zu ermitteln, ob ein der Betätigungsstärke der Betätigung des Bremsbetätigungselements (22) entsprechendes Generator-Bremsmoment (Mgen) mittels mindestens eines Elektromotors des Fahrzeugs ausübbar ist, wobei das mindestens eine erste Steuersignal (106, la-HR) an die Hinterrad-Radauslassventile (40a, 40b) und das mindestens eine zweite Steuersignal (108, le-VR) an die Vorderrad-Radeinlassventile (34a, 34b) nur ausgegeben werden, sofern das der Betätigungsstärke entsprechende Generator-Bremsmoment (Mgen) mittels des mindestens einen Elektromotors ausübbar ist;

und wobei, sofern nach dem Begrenzen des Druckaufbaus in den Bremskreisen (10, 12) auf den Ansprechdruck das der Betätigungsstärke entsprechende Generator-Bremsmoment (Mgen) mittels des mindestens einen Elektromotors nicht mehr ausübbar ist, die Ansteuereinrichtung (102) zusätzlich dazu ausgelegt ist, die Vorderrad-Radeinlassventile (34a, 34b) der Vorderrad-Radbremszylinder (16a, 16b) aus dem geschlossenen Zustand in einen geöffneten Zustand zu steuern, so dass mittels einer weiteren Betätigung des Bremsbetätigungselements (22) durch den Fahrer ein Bremsdruckaufbau in den Vorderrad-Radbremszylinder (16a, 16b) bewirkbar ist, und nach einem Steuern der Vorderrad-Radeinlassventile (34a, 34b) aus dem geschlossenen Zustand in den geöffneten Zustand eine Δp-Regelung der Hinterrad-Radeinlassventile (40a, 40b) der Hinterrad-Radbremszylinder (14a, 14b) anzusteuern, so dass ein Vorderrad-Bremsmoment (M-VR) der Vorderrad-Radbremszylinder (16a, 16b) einstellbar ist.

7. Bremssystem, für ein Fahrzeug, mit einer Steuervorrichtung (100) nach Anspruch 6.

**Claims**

1. Method for operating a brake system of a vehicle, having the step:

> limiting a brake pressure build-up at least in one brake circuit (10, 12) of the brake system to a response pressure of an accumulator volume (46a, 46b) of the at least one brake circuit (10, 12) at least intermittently during an actuation, by a driver of the vehicle, of a brake actuation element (22) which is connected to a master brake cylinder (18) of the brake system, by controlling at least one wheel outlet valve (40a, 40b) of at least one wheel brake cylinder (14a, 14b) of the at least one brake circuit (10, 12) into an open state;

> wherein

> the rear-wheel wheel outlet valves (40a, 40b) of the rear-wheel wheel brake cylinders (14a, 14b), which are assigned to in each case one rear wheel of the vehicle, are controlled into the open state at least intermittently during the actuation of the brake actuation element (22), and the front-wheel wheel inlet valves (34a, 34b) of the front-wheel wheel brake cylinders (16a, 16b), which are assigned to in each case one front wheel of the vehicle, are controlled into a closed state at least intermittently during the control of the rear-wheel wheel outlet valves (40a, 40b) of the rear-wheel wheel brake cylinders (14a, 14b) into the open state;

wherein, before the limitation of the pressure build-up in the brake circuits (10, 12) to the response pressure, it is determined whether a generator braking torque (Mgen) corresponding to an actuation intensity of the actuation of the brake actuation element (22) can be imparted by means of at least one electric motor of the vehicle, and the limitation of the pressure build-up in the brake circuits (10, 12) to the response pressure is implemented only if the generator braking torque (Mgen) corresponding to the actuation intensity can be imparted by means of the at least one electric motor; and
wherein if, after the limitation of the pressure build-up in the brake circuits (10, 12) to the response pressure, it is determined that the generator braking torque (Mgen) corresponding to the actuation intensity can no longer be imparted by means of the at least one electric motor, the front-wheel wheel inlet valves (34a, 34b) of the front-wheel wheel brake cylinders (16a, 16b) are controlled from the closed state into an open state, whereby a brake pressure build-up in the front-wheel wheel brake cylinders (16a, 16b) can be effected by means of a further actuation of the brake actuation element (22) by the driver, and after control of the front-wheel wheel inlet valves (34a, 34b) from the closed state into the open state, Δp regulation is performed by means of the rear-wheel wheel inlet valves (40a, 40b) of the rear-wheel wheel brake cylinders (14a, 14b) in order to set a front-wheel braking torque (M-VR) of the front-wheel wheel brake cylinders (16a, 16b).

2. Method according to Claim 1, wherein the rear-wheel wheel inlet valves (32a, 32b) of the rear-wheel wheel brake cylinders (14a, 14b) are controlled into an open state at least intermittently during the control of the rear-wheel wheel outlet valves (40a, 40b) of the rear-wheel wheel brake cylinders (14a, 14b) into the open state.

3. Method according to Claim 1 or 2, wherein, during the control of the rear-wheel wheel outlet valves (40a, 40b) of the rear-wheel wheel brake cylinders (14a, 14b) into the open state, the front-wheel wheel inlet valves (34a, 34b) of the front-wheel wheel brake cylinders (16a, 16b) are controlled into the closed state in such a slowed manner that the front-wheel wheel brake cylinders (16a, 16b) are pre-charged without a brake pressure build-up.

4. Method according to Claim 1 or 2, wherein, for the limitation of the pressure build-up in the brake circuits (10, 12) to the response pressure, simultaneous control of the rear-wheel wheel outlet valves (40a, 40b) into the open state and of the front-wheel wheel brake cylinders (34a, 34b) into the closed state is performed.

5. Method according to one of the preceding claims, wherein if, after the control of the front-wheel wheel inlet valves (34a, 34b) from the closed state into the open state, it is determined that the generator braking torque (Mgen) corresponding to the actuation intensity can be imparted again by means of the at least one electric motor, the brake pressure prevailing in the brake circuits (10, 12) is limited to the response pressure by virtue of the rear-wheel wheel outlet valves (40a, 40b) being controlled into the open state.

6. Control device (100) for a brake system of a vehicle, having:

an activation means (102) by which at least one wheel outlet valve (40a, 40b) of a wheel brake cylinder (14a, 14b) of at least one brake circuit (10, 12) of the brake system can, taking into consideration at least one provided sensor signal (104) relating to an actuation intensity of an actuation, by a driver of the vehicle, of a brake actuation element (22) which is connected to a master brake cylinder (18) of the brake system, be controlled into an open state such that a brake pressure build-up at least in the at least one brake circuit (10, 12) can be limited to a response pressure of an accumulator volume (46a, 46b) of the at least one brake circuit (10, 12) at least intermittently during an actuation of the brake actuation element (22);

wherein

the activation means (102) is additionally configured to control the rear-wheel wheel outlet valves (40a, 40b) of the rear-wheel wheel brake cylinders (14a, 14b), which are assigned to in each case one rear wheel of the vehicle, into the open state by means of at least one first control signal (106, la-HR) at least intermittently during the actuation of the brake actuation element (22), and to control the front-wheel wheel inlet valves (34a, 34b) of the front-wheel wheel brake cylinders (16a, 16b), which are assigned to in each case one front wheel of the vehicle, into a closed state by means of at least one second control signal (108, le-VR) at least intermittently during the provision of the at least one first control signal (106, la-HR) to the rear-wheel wheel outlet valves (40a, 40b);

**characterized in that**,
the activation means (102) is additionally configured to determine, before an outputting of the at least one first control signal (106, la-HR) and of the at least one second control signal (108, le-VR), whether a generator braking torque (Mgen) corresponding to the actuation intensity of the actuation of the brake actuation element (22) can be imparted by means of at least one electric motor of the vehicle, wherein the at least one first control signal (106, la-HR) is output to the rear-wheel wheel outlet valves (40a, 40b), and the at least one second control signal (108, le-VR) is output to the front-wheel wheel inlet valves (34a, 34b), only if the generator braking torque (Mgen) corresponding to the actuation intensity can be imparted by means of the at least one electric motor;
and wherein if, after the limitation of the pressure build-up in the brake circuits (10, 12) to the response pressure, the generator braking torque (Mgen) corresponding to the actuation intensity can no longer be imparted by means of the at least one electric motor, the activation means (102) is additionally configured to control the front-wheel wheel inlet valves (34a, 34b) of the front-wheel wheel brake cylinders (16a, 16b) from the closed state into an open state, such that a brake pressure build-up in the front-wheel wheel brake cylinders (16a, 16b) can be effected by means of a further actuation of the brake actuation element (22) by the driver, and after control of the front-wheel wheel inlet valves (34a, 34b) from the closed state into the open state, to activate Δp regulation of the rear-wheel wheel inlet valves (40a, 40b) of the rear-wheel wheel brake cylinders (14a, 14b) such that a front-wheel braking torque (M-VR) of the front-wheel wheel brake cylinders (16a, 16b) can be set.

7. Brake system for a vehicle, having a control device (100) according to Claim 6.

**Revendications**

1. Procédé pour faire fonctionner un système de freinage d'un véhicule, comprenant l'étape suivante :

limitation d'une augmentation de la pression de freinage au moins dans un circuit de freinage (10, 12) du système de freinage à une pression de déclenchement d'un volume d'accumulateur (46a, 46b) de l'au moins un circuit de freinage (10, 12) au moins temporairement pendant un actionnement, par un conducteur du véhicule, d'un élément d'actionnement des freins (22) raccordé à un cylindre de frein principal (18) du système de freinage, par commande dans un état ouvert d'au moins une soupape de sortie de roue (40a, 40b) d'au moins un cylindre de frein de roue (14a, 14b) de l'au moins un circuit de freinage (10, 12) ;
dans lequel les soupapes de sortie de roue des roues arrière (40a, 40b) des cylindres de frein de roue des roues arrière (14a, 14b) qui sont à chaque fois associés à une roue arrière du véhicule, sont commandées au moins temporairement dans l'état ouvert pendant l'actionnement de l'élément d'actionnement des freins (22) et au moins temporairement pendant la commande dans l'état ouvert des soupapes de sortie de roue des roues arrière (40a, 40b) des cylindres de frein de roue des roues arrière (14a, 14b), les soupapes d'entrée de roue des roues avant (34a, 34b) des cylindres de frein de roue des roues avant (16a, 16b) qui sont à chaque fois associés à une roue avant du véhicule, sont commandées dans un état fermé ;

dans lequel, avant la limitation de l'augmentation de pression dans les circuits de freinage (10, 12) à la pression de déclenchement, on détermine si un couple de freinage générateur (Mgen) correspondant à une force d'actionnement de l'actionnement de l'élément d'actionnement des freins (22) peut être exercé au moyen d'au moins un moteur électrique de véhicule, et la limitation de l'augmentation de pression dans les circuits de freinage (10, 12) à la pression de déclenchement est seulement réalisée si le couple de freinage générateur (Mgen) correspondant à la force d'actionnement peut être exercé au moyen de l'au moins un moteur électrique ; et dans lequel, après la limitation de l'augmentation de pression dans les circuits de freinage (10, 12) à la pression de déclenchement, si l'on détermine que le couple de freinage générateur (Mgen) correspondant à la force d'actionnement ne peut plus être exercé au moyen de l'au moins un moteur électrique, les soupapes d'entrée de roue des roues avant (34a, 34b) des cylindres de frein de roue des roues avant (16, 16b) sont commandées de l'état fermé dans un état ouvert, de sorte qu'au moyen d'un actionnement supplémentaire de l'élément d'actionnement des freins (22) par le conducteur, une augmentation de pression de freinage puisse être provoquée dans les cylindres de frein de roue des roues avant (16a, 16b), et après une commande des soupapes d'entrée de roue des roues avant (34a, 34b) de l'état fermé dans l'état ouvert, une régulation Δp au moyen des soupapes d'entrée de roue des roues arrière (40a, 40b) des cylindres de frein de roue des roues arrière (14a, 14b) est réalisée afin d'ajuster un couple de freinage des roues avant (M-VR) des cylindres de frein de roue des roues avant (16a, 16b).

2. Procédé selon la revendication 1, dans lequel au moins temporairement pendant la commande des soupapes de sortie de roue des roues arrière (40a, 40b) des cylindres de frein de roue des roues arrière (14a, 14b) dans l'état ouvert, les soupapes d'entrée de roue des roues arrière (32a, 32b) des cylindres de frein de roue des roues arrière (14a, 14b) sont commandées dans un état ouvert.

3. Procédé selon la revendication 1 ou 2, dans lequel pendant la commande dans l'état ouvert des soupapes de sortie de roue des roues arrière (40a, 40b) des cylindres de frein de roue des roues arrière (14a, 14b), les soupapes d'entrée de roue des roues avant (34a, 34b) des cylindres de frein de roue des roues avant (16, 16b) sont commandées dans l'état fermé de manière retardée de telle sorte que les cylindres de frein de roue des roues avant (16a, 16b) soient préremplis sans augmentation de la pression de freinage.

4. Procédé selon la revendication 1 ou 2, dans lequel pour la limitation de l'augmentation de pression dans les circuits de freinage (10, 12) à la pression de déclenchement, une commande simultanée des soupapes de sortie de roue des roues arrière (40a, 40b) dans l'état ouvert et des cylindres de frein de roue des roues avant (34a, 34b) dans l'état fermé est réalisée.

5. Procédé selon l'une quelconque des revendications précédentes, dans lequel, après la commande des soupapes d'entrée de roue des roues avant (34a, 34b) de l'état fermé dans l'état ouvert, si l'on détermine que le couple de freinage générateur (Mgen) correspondant à la force d'actionnement peut à nouveau être exercé au moyen de l'au moins un moteur électrique, la pression de freinage existant dans les circuits de freinage (10, 12) est limitée à la pression de déclenchement, par le fait que les soupapes de sortie de roue des roues arrière (40a, 40b) sont commandées dans l'état ouvert.

6. Dispositif de commande (100) pour un système de freinage d'un véhicule, comprenant :

un dispositif de commande d'actionnement (102) au moyen duquel au moins une soupape de sortie de roue (40a, 40b) d'un cylindre de frein de roue (14a, 14b) d'au moins un circuit de freinage (10, 12) du système de freinage peut être commandée dans un état ouvert par un conducteur du véhicule en tenant compte d'au moins un signal de capteur fourni (104) relatif à une force d'actionnement d'un actionnement d'un élément d'actionnement des freins (22) relié à un cylindre de frein principal (18) du système de freinage, de telle sorte qu'une augmentation de la pression de freinage au moins dans l'au moins un circuit de freinage (10, 12) puisse être limitée au moins temporairement pendant un actionnement de l'élément d'actionnement des freins (22) à une pression de déclenchement d'un volume d'accumulateur (46a, 46b) de l'au moins un circuit de freinage (10, 12) , dans lequel le dispositif de commande d'actionnement (102) est en outre conçu de manière à commander dans l'état ouvert, au moins temporairement pendant l'actionnement de l'élément d'actionnement des freins (22), les soupapes de sortie de roue des roues arrière (40a, 40b) des cylindres de frein de roue des roues arrière (14a, 14b) qui sont à chaque fois associés à une roue arrière du véhicule, au moyen d'au moins un premier signal de commande (106, la-HR), et pour commander dans un état fermé, au moins temporairement, pendant la fourniture de l'au moins un premier signal de commande (106, la-HR) aux soupapes de sortie de roue des roues arrière (40a, 40b), les soupapes d'entrée de roue des roues avant (34a, 34b) des cylindres de frein de roue des roues avant (16a, 16b) qui sont à chaque fois associés à une roue avant du véhicule, au moyen d'au moins un deuxième signal de commande (108, le-VR) ;

**caractérisé en ce que** le dispositif de commande d'actionnement (102) est en outre conçu, avant une émission de l'au moins un premier signal de commande (106, la-HR) et de l'au moins un deuxième signal de commande (108, le-VR), pour déterminer si un couple de freinage générateur (Mgen) correspondant à la force d'actionnement de l'actionnement de l'élément d'actionnement des freins (22) peut être exercé au moyen d'au moins un moteur électrique du véhicule, l'au moins un premier signal de commande (106, la-HR) étant émis au niveau des soupapes de sortie de roue des roues arrière (40a, 40b) et l'au moins un deuxième signal de commande (108, le-VR) étant émis au niveau des soupapes d'entrée de roue des roues avant (34a, 34b) seulement si le couple de freinage générateur (Mgen) correspondant à la force d'actionnement peut être exercé au moyen de l'au moins un moteur électrique ;

et, après la limitation de l'augmentation de pression dans les circuits de freinage (10, 12) à la pression de déclenchement, si le couple de freinage générateur (Mgen) correspondant à la force d'actionnement ne peut plus être exercé au moyen de l'au moins un moteur électrique, le dispositif de commande d'actionnement (102) étant en outre conçu pour commander de l'état fermé dans l'état ouvert les soupapes d'entrée de roue des roues avant (34a, 34b) des cylindres de frein de roue des roues avant (16a, 16), de telle sorte qu'au moyen d'un actionnement supplémentaire de l'élément d'actionnement des freins (22) par le conducteur, une augmentation de pression de freinage dans les cylindres de frein de roue des roues avant (16a, 16b) puisse être provoquée, et après une commande des soupapes d'entrée de roue des roues avant (34a, 34b) de l'état fermé dans l'état ouvert, pour commander l'actionnement d'une régulation $\Delta$p des soupapes d'entrée de roue des roues arrière (40a, 40b) des cylindres de frein de roue des roues arrière (14a, 14b) de telle sorte qu'un couple de freinage des roues avant (M-VR) des cylindres de frein de roue des roues avant (16a, 16b) puisse être ajusté.

7. Système de freinage pour un véhicule, comprenant un dispositif de commande (100) selon la revendication 6.

Fig. 1

**Fig. 2a**

**Fig. 2b**

**Fig. 2c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19604134 A1
- WO 2011092308 A1
- WO 2011134987 A1
- US 5951115 A